# EUROPÄISCHE PATENTSCHRIFT

(11) **EP 2 104 394 B1**
(45) Veröffentlichungstag und Bekanntmachung des Hinweises auf die Patenterteilung: **25.09.2013**
(21) Anmeldenummer: 09152371.2
(22) Anmeldetag: 09.02.2009
(51) Int. Cl.: H04W 76/02

(54) **Verfahren und Telekommunikationsanordnung zum Bereitstellen einer Telekommunikationsverbindung (TK-Verbindung) zu einem gerufenen Mobilfunkendgerät**
Method and telecommunications assembly for providing a telecommunications connection (TC connection) to a called mobile terminal
Procédé et agencement de télécommunication destinés à la préparation d'une liaison de télécommunication (liaison TK) vers un appareil radio mobile appelé

(30) Priorität: 16.03.2008 DE 102008014229
(43) Veröffentlichungstag der Anmeldung: 23.09.2009
(73) Patentinhaber: Teles AG Informationstechnologien, 10587 Berlin (DE)
(72) Erfinder: Paetsch, Frank, 12357, Berlin (DE)
(74) Vertreter: Müller, Wolfram Hubertus

(56) Entgegenhaltungen:
- WO-A-2004/086788
- DISCOVERY TELECOM TECHNOLOGIES: "The DTT Virtual SIM System for Carrier Class GSM Gateways"[Online] 19. Dezember 2006 (2006-12-19), Seiten 1-30, XP002529086 Gefunden im Internet: URL:www.iptech.com.ua/downloads/gsmgate/dt t/dttsim.pdf> [gefunden am 2009-05-25]

## Beschreibung

Die Erfindung betrifft ein Verfahren zum Bereitstellen einer Telekommunikationsverbindung (TK-Verbindung) zu einem gerufenen Mobilfunkendgerät und eine Telekommunikationsanordnung zur Durchführung des Verfahrens.

### Hintergrund der Erfindung

Es sind so genannte Mobilfunk-Gateways bekannt, die eine Schnittstelle zwischen einem oder mehreren Telekommunikations-Mobilfunknetzen und beliebigen anderen Netzen, beispielsweise einem Telekommunikations-Festnetz oder einem IP-Netz bereitstellen. Ein Mobilfunk-Gateway wird von dem Nutzer eines anderen Netzes angerufen und leitet die gewünschte Verbindung über einen Mobilfunkkanal in das Mobilfunknetz weiter, in dem sich der gerufene Teilnehmer befindet. Hierzu implementiert das Mobilfunk-Gateway die Funktionalität eines Mobilfunktelefons und ruft gewissermaßen als Mobilfunktelefon den gerufenen Teilnehmer an. Mobilfunk-Gateways verfügen somit über die gleichen Mobilfunkmodule, wie sie in Mobilfunkendgeräten (Handys) zum Einsatz kommen. Derartige Mobilfunk-Gateways sind beispielsweise aus der DE 103 14 144 A1 bekannt.

Dabei ist vorgesehen, dass das Mobilfunk-Gateway eine Vielzahl von Einsteckkarten, insbesondere so genannte SIM-Karten für die verwalteten Mobilfunkkanäle enthält. Es können beliebige SIM-Karten verschiedener Netzbetreiber eingesetzt werden. Eine SIM-Karte ist eine Einsteckkarte mit einer Kennung, über die ein Mobilfunkgerät einem bestimmten Netzbetreiber zugeordnet wird, eine bestimmte Rufnummer erhält und in allen Mobilfunknetzen eindeutig identifizierbar ist. Darüber hinaus weist eine SIM-Karte eine PIN-Nummer (PIN - Personal Identity Number), sicherheitsrelevante Daten wie Kommunikationsschlüssel und Sicherheitsalgorithmen, nutzerspezifische Daten wie Kurzwahlnummern sowie netzspezifische Daten wie die Kennung des aktuellen Aufenthaltsbereiches auf. Eine SIM-Karte personalisiert ein Mobilfunkendgerät hinsichtlich des Nutzers und hinsichtlich des Netzbetreibers und ermöglicht die Abrechnung von Gesprächsgebühren von dem Netzbetreiber.

Aus der EP 1 357 732 B1 sind ein Server für ein Telekommunikationssystem und ein Verfahren zum Erstellen einer Telekommunikationsverbindung bekannt, bei denen SIM-Karten in einem zentralen SIM-Server verwaltet und eine SIM-Karte bei Vorliegen eines Wahlsignals für die Zwecke der aufzubauenden Telekommunikationsverbindung einer lokalen Einheit zugeordnet wird.

Dokument DISCOVERY TELECOM TECHNOLOGIES: "The DTT Virtual SIM System for Carrier Class GSM Gateways", 19. Dezember, URL:www.iptech.com.ua/downloads/gsmgate/dtt/dttsim.pdf beschreibt ein Verfahren zum dynamischen Allokieren von SIM-Teilnehmerdaten zu beliebigen Verbindungskanälen eines Gateways (Virtual SIM). Hierbei werden von einem zentralen SIM Server dynamisch (User Defined Rules) aus einem Pool SIM-Teilnehmerdaten den einzelnen GSM-Endgeräten des GSM Gateways zugewiesen.

Der vorliegenden Erfindung liegt die Aufgabe zu Grunde, ein Verfahren zum effizienten Bereitstellen einer Telekommunikationsverbindung zu einem Mobilfunkendgerät unter Verwendung eines Mobilfunk-Gateways und eine Telekommunikationsanordnung zur Durchführung des Verfahrens zur Verfügung zu stellen.

### Zusammenfassung der Erfindung

Diese Aufgabe wird erfindungsgemäß durch ein Verfahren mit den Merkmalen des Anspruchs 1 und eine Telekommunikationsanordnung mit den Merkmalen des Anspruchs 11 gelöst. Beispielhafte Ausgestaltungen der Erfindung sind in den Unteransprüchen angegeben.

Danach werden einem Switch, über den ein Verbindungsaufbau zu einem gerufenen Mobilfunkendgerät erfolgt, Routing-Informationen bereitgestellt, die das Weiterleiten des Verbindungsaufbaus zu einem bestimmten Mobilfunk-Gateway betreffen. Zum Bereitstellen der Routing-Informationen werden Daten einer Einsteckkarten-Vorrichtung zu mindestens einem Parameter von Einsteckkarten ausgewertet, die jeweils einem Mobilfunk-Gateway zugeordnet sind und die in der Einsteckkarten-Vorrichtung gemeinsam angeordnet und verwaltet werden. Dabei werden Daten zu mindestens einem Parameter derjenigen der verwalteten Einsteckkarten ausgewertet, die bei Eingehen des Verbindungsaufbaus einem Mobilfunk-Gateway zugeordnet sind. Anhand dieser Auswertung wird eine der verwalteten und einem Mobilfunk-Gateway zugeordneten Einsteckkarten für die Mobilkommunikation zu dem gerufenen Mobilfunkendgerät ausgewählt. Der Verbindungsaufbau wird anhand der bereitgestellten Routing-Informationen vom Switch zu demjenigen Mobilfunk-Gateway weitergeleitet, das der ausgewählten Einsteckkarte zugeordnet ist. Es wird ein Mobilfunkkanal unter Verwendung der ausgewählten Einsteckkarte bereitgestellt und der bereitgestellte Mobilfunkkanal für die TK-Verbindung zum Mobilfunkendgerät genutzt.

Die erfindungsgemäße Auswertung von Daten zu Parametern der verwalteten Einsteckkarten zum Bereitstellen von Routing-Informationen für den Switch erfolgt nur hinsichtlich solcher verwalteter Einsteckkarten, die aktuell, also bei Eingehen eines Verbindungsaufbauwunsches, einem Mobilfunk-Gateway zugeordnet sind. Denn nur zu solchen Einsteckkarten und zugeordneten Mobilfunkkanälen soll ein Routing eines eingehenden Verbindungsaufbaus erfolgen. Anderenfalls müsste eine Einsteckkarte einem Mobilfunk-Gateway bei Vorliegen eines Verbindungsaufbauwunsches erst noch zugeordnet werden, was zu vermeiden ist, da dies zu einer erheblichen Verzögerung des Rufaufbaus führen würde (sogenannter "Post Dial Delay").

Bei der Einsteckkarten-Vorrichtung handelt es sich in einer Ausgestaltung um einen sogenannten SIM-Server. In einem SIM-Server werden Einsteckkarten für die Mobilfunkkommunikation an einem zentralen Ort bzw. einem zentralen Computer bereitgestellt. Je nach Anforderung und Bedarf wird eine Einsteckkarte seitens eines Mobilfunk-Gateways von dem zentralen Computer angefordert und von diesem dem Mobilfunk-Gateway bereitgestellt. Dieses Bereitstellen der Einsteckkarte für die Mobilfunkkommunikation erfolgt nicht physisch. Es werden lediglich die Informationen, die eine Einsteckkarte identifizieren und deren Funktionalität widerspiegeln, per Datenfernübertragung an das Mobilfunk-Gateway übertragen. Derartige SIM-Server sind beispielsweise in der DE 103 11 980 A1 beschrieben.

Die Einsteckkarte für die Mobilfunkkommunikation befindet sich somit gewissermaßen virtuell auf einem zentralen Computer und ihre Funktionalität wird bei Bedarf auf dem Mobilfunk-Gateway auf der Grundlage spezifischer Informationen und Daten, die vom zentralen Computer übertragen werden, emuliert. Dies ermöglicht die Verwendung eines zentralen Einsteckkarten-Pools für ein oder mehrere Mobilfunk-Gateways.

Die erfindungsgemäße Lösung erlaubt es, einen Switch (z.B. eine Vermittlungsstelle) durch eine Einsteckkarten-Vorrichtung aufgrund dieser vorliegender Daten beispielsweise der Verfügbarkeit, der Priorität und der Qualität der verwalteten Einsteckkarten zu steuern und eine Telekommunikationsverbindung, insbesondere einen Ruf und diesem zugeordnete Signalisierungen gezielt auf ein Mobilfunk-Gateways mit der selektierten SIM-Karte zu leiten.

Das erfindungsgemäße Verfahren ermöglicht somit eine effiziente Auswahl der richtigen "Route" im Switch zu den von einer Einsteckkarten-Vorrichtung verwalteten Einsteckkarten und Mobilfunk-Gateways unter Verwendung von Information der Einsteckkarten-Vorrichtung. Dabei werden die vorhandenen Daten der Einsteckkarten-Vorrichtung beispielsweise hinsichtlich Priorität, Tarifmodell und Qualität der Karten zur weiteren Steuerung der Rufe verwendet. Beispielsweise werden verfügbare Kanäle mit einer höheren Priorität und/oder einem besseren Tarifmodell und/oder einer besseren Qualität bevorzugt für einen Ruf verwendet. Die Erfindung erlaubt hierdurch eine effiziente Auslastung der Ressourcen und Signalisierung. Beispielsweise kann ein Mehrfachanwählen der einzelnen Mobilfunk-Gateways vermieden werden. Des Weiteren wird durch die Erfindung eine Verzögerung des Rufaufbaus nach dem Wähen ("Post Dial Delay") stark reduziert, da ein Alternativ-Routing bei Nichtverfügbarkeit entfallen kann.

Es wird darauf hingewiesen, dass der Begriff "Einsteckkarte" im Sinne der vorliegenden Erfindung funktional zu verstehen ist. Es wird sich in der Regel um steckbare oder schiebbare Chipkarte handeln. Grundsätzlich kann die Funktionalität einer Einsteckkarte jedoch etwa auch durch Software bereitgestellt werden, die etwa über das Internet, über Funk oder eine CD auf das Telekommunikationsgerät geladen wird. Die Ausbildung als SIM-Karte stellt ein Beispiel dar. Zukünftige Standards der Mobilfunkkommunikation mögen andere Einsteckkarten vorsehen.

In einer Ausgestaltung der Erfindung teilt zur Bereitstellung von Routing-Informationen der Switch den Verbindungsaufbauwunsch zum gerufenen Mobilfunkendgerät der Einsteckkarten-Vorrichtung oder einer dieser zugeordneten Einheit mit, erstellt die Einsteckkarten-Vorrichtung oder die dieser zugeordnete Einheit daraufhin eine Routing-Information durch Auswerten mindestens eines Parameters der durch die Einsteckkarten-Vorrichtung verwalteten Einsteckkarten teilt die Einsteckkarten-Vorrichtung diese Routing-Information dem Switch mit, der daraufhin den Ruf entsprechend routet. Dabei enthalten die Routing-Information in einer Ausführungsvariante zumindest Daten, die die ausgewählte Einsteckkarte und ein dieser zugeordnetes Mobilfunk-Gateway identifizieren. Diese Zuordnung kann fest sein oder aber auch durch die Einsteckkarten-Vorrichtung für den aktuellen TK-Vorgang vorgenommen werden.

Der oder die Parameter der Einsteckkarten, die zum Bereitstellen der Routing-Informationen ausgewertet werden, können vielfältig sein. Ein möglicher Parameter ist die Verfügbarkeit der Karten. Danach wird nur eine Karte ausgewählt, die aktuell nicht belegt ist, d.h. die nicht bereits für eine Mobilfunkkommunikation genutzt wird. Ein weiterer möglicher Parameter ist ein Zeit- und/oder Geldkontingent der Einsteckkarten, wie es beispielsweise bei Prepaid-Karten vorhanden ist. Wenn beispielsweise ein solches Kontingent fast abgelaufen ist, wird bei einer gewünschten Premium-Verbindung eine solche Karte nicht ausgewählt werden.

Ein weiterer möglicher Parameter ist eine den Einsteckkarten zugeordnete Priorität. Es kann Einsteckkarten mit hoher Priorität geben, die allgemein bevorzugt eingesetzt werden oder die bevorzugt bei bestimmten Kategorien von Verbindungen, beispielsweise Premium-Verbindungen eingesetzt werden. Ein weiterer möglicher Parameter ist ein den Einsteckkarten zugeordneter Tarif, wobei der Tarif mit einer bestimmten Priorität einhergehen kann. Ein weiterer möglicher Parameter ist die Zugehörigkeit der Einsteckkarten jeweils zu einem bestimmten Mobilfunknetz. So wird in der Regel eine Einsteckkarte ausgewählt werden, die dem gleichen Mobilfunknetz angehört wie das gerufene Mobilfunkendgerät bzw. dessen Einsteckkarte, so dass ein weiteres Routen des Mobilfunkrufs zwischen Gateway und Mobilfunkendgerät nicht erforderlich ist, auch wenn ein solches weiteres Routen keineswegs ausgeschlossen ist.

Ein weiterer möglicher Parameter ist mindestens ein den Einsteckkarten zugeordnetes Qualitätsmerkmal. Dabei kann es sich um die mittlere Verbindungslänge ("Average Call Duration") der mit den jeweiligen Einsteckkarten realisierten Mobilfunkverbindungen handeln. Weiter kann es sich dabei um die Signalstärke der mit den jeweiligen Einsteckkarten realisierten Mobilfunkverbindungen handeln. Weiter kann es sich dabei um das Verhältnis zwischen den erfolgreichen und den insgesamt erfolgten Verbindungsversuchen der jeweiligen Einsteckkarten handeln, die sogenannte "Average Seizure Ratio" - ASR. Die ASR stellt ebenso wie die zuvor genannten Kriterien ein Maß für die Netzwerkqualität dar, die in der ITU-Empfehlung SG2 E.411 definiert ist.

In einer Ausgestaltung der Erfindung ist vorgesehen, dass eine solche Einsteckkarte für die Mobilkommunikation zu dem gerufenen Mobilfunkendgerät ausgewählt wird, bei der die Auswertung des mindestens einen Parameters ergibt, dass der oder die Parameter auf der Basis einer zuvor festgelegten Bewertung die Bewertungskriterien am besten oder ebenso gut wie andere Einsteckkarten erfüllen.

Die erfindungsgemäße Telekommunikationsanordnung gemäß Anspruch 11 weist auf:
- einen Switch eines Kommunikationsnetzes,
- mehrere Mobilfunk-Gateways mit jeweils einer Mehrzahl von Funkmodulen für die Mobilfunkkommunikation, wobei jedem Mobilfunk-Gateway eine Mehrzahl von mit einer Kennung versehenen Einsteckkarten zugeordnet ist, die jeweils eine Nutzung eines Funkmoduls für die Mobilfunkkommunikation ermöglichen, und
- eine Einsteckkarten-Vorrichtung, in der die dem oder den Mobilfunk-Gateways jeweils zugeordneten Einsteckkarten gemeinsam angeordnet und verwaltet werden, wobei
- die Einsteckkarten-Vorrichtung oder eine dieser zugeordnete Einheit dazu geeignet und ausgebildet ist, dem Switch Routing-Informationen bereitzustellen, die das Weiterleiten eines Verbindungsaufbaus an ein Mobilfunk-Gateway betreffen, und dazu Daten zu mindestens einem Parameter derjenigen der verwalteten Einsteckkarten auswertet, die bei Eingehen des Verbindungsaufbaus einem Mobilfunk-Gateway zugeordnet sind, und anhand dieser Auswertung eine der einem Mobilfunk-Gateway zugeordneten Einsteckkarten für die Mobilkommunikation zu dem gerufenen Mobilfunkendgerät auswählt.

Die einzelnen Komponenten der erfindungsgemäßen Telekommunikationsanordnung können dabei innerhalb eines Netzes realisiert sein oder sich ganz oder teilweise in unterschiedlichen Netzen befinden.

Bei der eventuell zugeordneten Einheit handelt es sich beispielsweise um ein System, dass auf die Daten der Einsteckkarten-Vorrichtung zugreifen und diese auswerten kann.

In einem Ausführungsbeispiel weist der Switch eine Schnittstelle zur Rufsteuerung und weist die Einsteckkarten-Vorrichtung oder die dieser zugeordnete Einheit ein Rufmanagement-Modul auf. Dabei sind die Schnittstelle und das Rufmanagement-Modul derart ausgebildet, dass der Switch bei Vorliegen eines Verbindungsaufbauwunsches zu dem gerufenen Mobilfunkendgerät dem Rufmanagement-Modul über die Schnittstelle den Verbindungsaufbauwunsch signalisiert, das Rufmanagement-Modul auf der Basis der Auswertung der Daten zu mindestens einem Parameter der verwalteten Einsteckkarten eine der Einsteckkarten auswählt, und daraufhin das Rufmanagement-Modul als Routing-Information Informationen betreffend die ausgewählte Einsteckkarte und ein dieser zugeordnetes Mobilfunk-Gateway an den Switch über dessen Schnittstelle überträgt.

In einem Ausführungsbeispiel ist die Schnittstelle zur Rufsteuerung des Switches gemäß einem offenen Schnittstellenstandard ausgebildet. Durch die mögliche Verwendung von offenen Schnittstellenstandards für eine externe Routing-Plattform zur Steuerung des Switches (z. B. RADIUS) können das Verfahren und die TK-Anordnung von dem verwendeten Switch unabhängig sein. Die Schnittstelle kann alternativ auch proprietär sein.

Der Switch kann grundsätzlich beliebig ausgebildet und in einem beliebigen Netz ausgebildet sein. In einer Ausführungsvariante handelt es sich um einen TDM-Switch eines leitungsvermittelten Netzes, etwa eines Telekommunikations-Festnetzes. In einer anderen Ausführungsvariante handelt es sich um einen Softswitch etwa eines Next-Generation-Networks.

### Beschreibung von Ausführungsbeispielen

Die Erfindung wird nachfolgend unter Bezugnahme auf die einzige Figur der Zeichnung anhand von Ausführungsbeispielen näher erläutert.

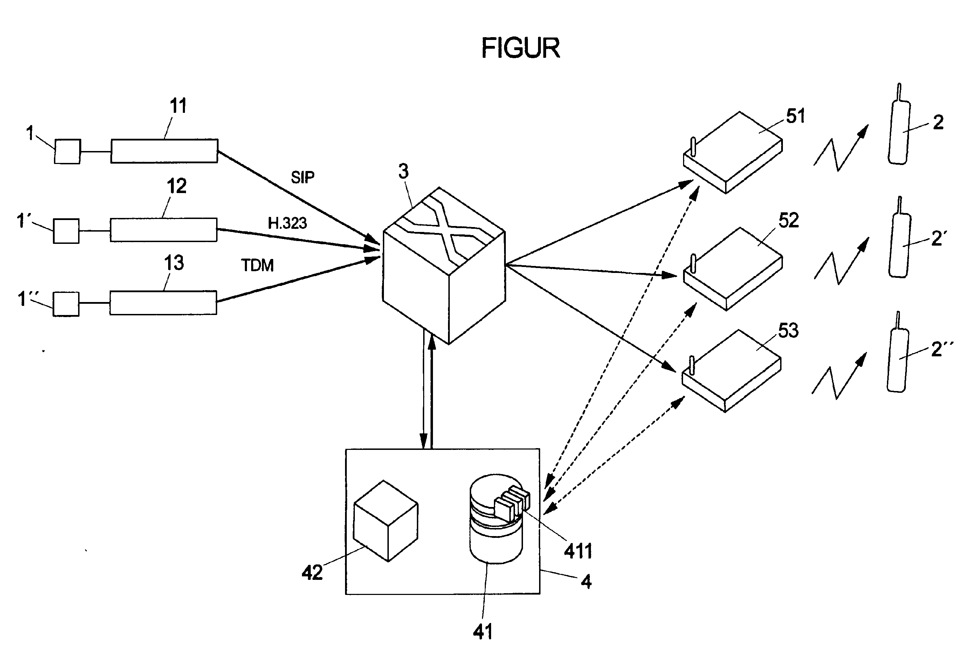

Die Figur 1 zeigt eine Telekommunikationsanordnung mit einem Switch, daran angeschlossenen Mobilfunk-Gateways und einer Einsteckkarten-Vorrichtung.

Die Figur 1 zeigt eine Telekommunikationsanordnung, die den Aufbau und die Bereitstellung einer TK-Verbindung zwischen einem rufenden Kommunikationsgerät 1, 1', 1" und einem gerufenen Kommunikationsgerät 2, 2', 2" ermöglicht. Bei dem rufenden Kommunikationsgerät 1, 1', 1" handelt es sich beispielsweise ein Telekommunikations-Endgerät (TK-Endgerät). Insbesondere kann es sich bei dem rufenden Kommunikationsgerät 1, 1', 1" um ein Festnetz-Telefon, ein IP-Telefon, ein Mobilfunktelefon, einen Computer mit einer Telefonie-Software, einen Handheld, ein WLAN-fähiges Endgerät etc. handeln.

Bei dem rufenden Kommunikationsgerät 2, 2', 2" handelt es sich um ein Mobilfunkendgerät. Damit wird jedes Gerät bezeichnet, das ein Funkmodul und eine Einsteckkarte aufweist, die eine Mobilfunkkommunikation ermöglicht. Insbesondere ist jedes Gerät ein Mobilfunkendgerät, dass eine Mobilstation (MS) aufweist, die ein mobiles oder stationäres Mobiltelefon und eine SIM-Karte umfasst.

Das rufende Kommunikationsgerät 1, 1', 1" ist über ein Kommunikationsnetz 11, 12, 13 mit einem Switch 3 verbunden, der ebenfalls einem Kommunikationsnetz angehört, das das gleiche Kommunikationsnetz wie eines der Netze 11, 12, 13 oder ein anderes Netz sein kann. Bei dem Kommunikationsnetz 11, 12, 13, über das ein Endgerät 1, 1', 1" mit dem Switch 3 verbunden ist, handelt es sich beispielsweise um ein IP-Netz, etwa das Internet, um ein leitungsvermitteltes Netz, beispielsweise um ein Telekommunikations-Festnetz, um ein Mobilfunknetz oder ein WLAN. Der Switch 3 ist beispielsweise ein TDM-Switch oder ein Softswitch. Die Verbindung eines Endgerätes 1, 1', 1" zu dem Switch 3 ist dabei in der Figur nur beispielhaft als über ein Netz 11, 12, 13 erfolgend dargestellt. Die Verbindung zum Switch 3 kann auch über mehrere Netze gleicher oder unterschiedlicher Art erfolgen.

Mit dem TK-Netz, in dem der Switch 3 angeordnet ist, sind des weiteren mehrere Mobilfunk-Gateways 51, 52, 53 direkt oder indirekt verbunden. Bei einer indirekten Verbindung erfolgt die Verbindung über mehrere Netze, die miteinander verbunden sind.

Jedes Mobilfunk-Gateway 51, 52, 53 stellt einen Netzzugang zu mindestens einem Mobilfunknetz bereit. Hierbei handelt es sich beispielsweise in Deutschland um die Netze T-Mobile, Vodafone, E-Plus und O₂. Über ein Mobilfunk-Gateway 51, 52, 53 kann jeweils ein Mobilfunkkanal und damit ein Ruf zu einem gerufenes Mobilfunkendgerät 2, 2', 2" hergestellt werden. In jedes Mobilfunk-Gateway 51, 52, 53 sind dabei eine Vielzahl von Mobilstationen integriert, die jeweils ein Funkmodul und eine SIM-Karte umfassen.

Die SIM-Karten sind in dem Mobilfunk-Gateways 51, 52, 53 allerdings nicht physisch vorhanden, sondern werden dort nur emuliert oder dergleichen. Stattdessen sind die SIM-Karten der Mobilfunk-Gateways 51, 52, 53 in einem zentralen SIM-Server 4 angeordnet. Je nach Anforderung und Bedarf wird eine SIM-Karte seitens eines Mobilfunk-Gateways 51, 52, 53 von dem SIM-Server 4 angefordert und von diesem dem Mobilfunk-Gateway 51, 52, 53 bereitgestellt. Ein solches Bereitstellen einer SIM-Karte erfolgt nicht physisch. Es werden lediglich die Informationen, die eine SIM-Karte identifizieren und deren Funktionalität widerspiegeln, per Datenfernübertragung an das Mobilfunk-Gateway 51, 52, 53 übertragen.

Der SIM-Server 4 weist eine Kartenverwaltungseinheit 41 und eine Rufmanagement-Modul ("Call Management Modul") 42 auf. Die Kartenverwaltungseinheit 41 besitzt eine Vielzahl von SIM-Kartenleseeinheiten 411, in die jeweils eine SIM-Karte einsetzbar ist. In einer Ausgestaltung sind dabei eine Vielzahl von Kartenleseeinheiten 411 mit einer Vielzahl von SIM-Karten vorhanden, die unterschiedlichen Netzen zugeordnet sein und die unterschiedliche Tarifmodelle, Qualitäten und Prioritäten aufweisen können. Über eine zentrale Steuerung (nicht dargestellt) werden die einzelnen SIM-Karten überwacht und ggf. einem Mobilfunk-Gateway 51, 52, 53 zugeordnet, wobei eine solche Zuordnung fest oder temporär sein kann. Derartige Kartenverwaltungseinheiten sind in der DE 103 11 980 A1 beschrieben.

Bei einer temporären Zuordnung erfolgt eine Zuordnung einer SIM-Karte zu einem Mobilfunk-Gateway 51, 52, 53 für einen bestimmten Zeitraum, beispielsweise um einen günstigen Tarif während dieses Zeitraums zu nutzen, oder zur Nutzung eines bestimmten Geldkontingents der SIM-Karte. In keinem Fall erfolgt eine Zuordnung einer SIM-Karte zu einem Mobilfunk-Gateway 51, 52, 53 erst bei Vorliegen eines bestimmten eingehenden Rufs. Denn in einem solchen Fall könnte wegen der dann bestehenden Notwendigkeit der SIM-Karte, sich für den eingehenden Ruf im Mobilfunknetzwerk zu registrieren, der Ruf nicht in einer zumutbaren Zeit aufgebaut werden: die Rufaufbauverzögerung ("Post Dial Delay") wäre zu groß. Mit anderen Worten ist eine temporäre Zuordnung einer Einsteckkarte zu einem Mobilfunk-Gateway 51, 52, 53 stets unabhängig ist von Verbindungsaufbauinformationen.

Die temporäre Zuordnung einer SIM-Karte zu einem Mobilfunk-Gateway 51, 52, 53 erfolgt somit immer in Abhängigkeit von Attributen oder Parametern wie z.B. bestimmten Tarifen oder Geldkontingenten, die unabhängig sind von Verbindungsaufbauinformationen und mit solchen nichts zu tun haben. Die temporäre Zuordnung einer SIM-Karte umfasst damit immer auch eine zeitliche Komponente. Für einen betrachteten eingehenden Ruf wird immer eine SIM-Karte ausgewählt, die einem Mobilfunk-Gateway 51, 52, 53 fest oder temporär bereits zugeordnet und in einem Mobilfunknetz bereits registriert ist.

Das Rufmanagement-Modul 42 ist im dargestellten Ausführungsbeispiel in den SIM-Server 4 integriert. Es kann jedoch auch als gesonderte Einheit oder Teil eines anderen Systems ausgebildet sein, für welchen Fall diese Einheit oder dieses System mit dem SIM-Server 4, der dann aus der Kartenverwaltungseinheit 41 besteht, kommuniziert. Das Rufmanagement-Modul 42 hat Zugriff zu Daten betreffend die von der Verwaltungseinheit 41 verwalteten SIM-Karten. Insbesondere kann es deren Parameter beispielsweise betreffend eine aktuelle Verfügbarkeit der Karten und/oder die Zugehörigkeit zu einem bestimmten Mobilfunknetz und/oder ein Zeit- oder Geldkontingent der Karten und/oder die Priorität der Karten und/oder die Qualität der Karten und/oder ein Tarifmodell der Karten erfassen und auswerten.

Der SIM-Server 4 kann über das Rufmanagement-Modul 42 mit dem Switch 3 kommunizieren und diesem Routing-Informationen bereitstellen. Der Switch 3 ist insofern durch das Rufmanagement-Modul 42 steuerbar. Er weist hierzu eine nicht gesondert dargestellte Schnittstelle auf, die eine Kommunikation mit dem Rufmanagement-Modul ermöglicht. Die Schnittstelle kann gemäß einem offenen Schnittstellenstandard, etwa RADIUS ("Remote Authentication Dial-In User Service") oder auch als proprietäre Schnittstelle ausgebildet sein.

Das TK-Netz enthält somit einen "steuerbaren" Switch 3 basierend auf offenen oder proprietären Schnittstellen zur Rufsteuerung. Der SIM-Server 4 selbst oder ein System, was auf die Daten des SIM-Servers 4 zugreift, enthält das Rufmanagement-Modul 42, das mit Hilfe der Steuerschnittstelle des Switches 3 Rufe eines Switches 3 steuern kann. Der Switch 3 signalisiert einen eingehenden Ruf an das Rufmanagement-Modul 42 und das Rufmanagement-Modul 42 wählt aufgrund von Informationen betreffend mindestens einen Parameter der SIM-Karten, die der SIM-Server 4 verwaltet, eine einem Mobilfunk-Gateway 51, 52, 53 bereits zugeordnete SIM-Karte und damit einen verfügbaren Kanal in einem der Mobilfunk-Gateways 51, 52, 53 aus.

Parameter, die zur Auswahl einer SIM-Karte von dem Rufmanagement-Modul 42 ausgewertet werden, sind zum Beispiel die Verfügbarkeit der SIM-Karte in einem verfügbaren Kanal eines Mobilfunk-Gateways, die Priorität der verfügbaren SIM-Karten, wobei die Priorität auf einem Tarifmodell oder andere Eigenschaften basiert, sowie die Qualität der verfügbaren SIM-Karten. Zur Bestimmung der "Qualität" einer SIM-Karte wird beispielsweise die mittlere Ruflänge ("Average Call Duration"), die Signalstärke und/oder das Verhältnis zwischen den erfolgreichen und den insgesamt erfolgten Verbindungsversuchen der jeweiligen SIM-Karte ("Average Seizure Ratio") bestimmt.

Der eingehende Ruf wird in einer Ausgestaltung auf die die "bestmögliche" SIM-Karte in einem Mobilfunkkanal eines der Mobilfunk-Gateways 51, 52, 53 gesendet. Diese "Routing-Information", die die SIM-Karte und ein dieser bei Eingehen des Rufs zugeordnetes Mobilfunk-Gateway enthält, wird an den Switch 3 zurückgegeben und das TK-Netz sendet den Ruf zu dem entsprechenden verfügbaren Mobilfunk-Gateway und Mobilfunkkanal.

Im einzelnen ist der Verfahrensablauf wie folgt. Sofern ein Endgerät 1, 1', 1" eine Telekommunikationsverbindung, insbesondere eine Telefonverbindung zu einem Mobilfunkendgerät 2, 2', 2" aufbauen will, wird der Verbindungswunsch über eines der Telekommunikationsnetze 11, 12, 13 und ggf. über weitere Netze an den Switch 3 geleitet. Die Signalisierung kann beispielsweise gemäß den Protokollen SIP (Session Initiation Protocol), H.323 oder, insbesondere bei leitungsvermittelten Verbindungen, beispielsweise im Rahmen einer ISDN (Integrated Services Digital Network) oder SS7 (Signalisierungssystem Nummer 7) Signalisierung erfolgen.

Der Ruf zu dem gerufenen Mobilfunkendgerät, beispielsweise dem Mobilfunkendgerät 2, wird im Switch 3 empfangen. Für den Switch 3 stellt sich nun die Frage, an welchen der Mobilfunk-Gateways 51, 52, 53 und an welche der Mobilstationen der jeweiligen Mobilfunk-Gateways 51, 52, 53 und damit an welche der den Mobilfunk-Gateways 51, 52, 53 zugeordneten SIM-Karten der Ruf geroutet werden soll. Der Switch 3 meldet hierzu den eingegangenen Ruf an das Rufmanagement-Modul 42. Das Rufmanagement-Modul 42 wählt nun wie erläutert beispielsweise aufgrund der erfolgten SIM-Zuordnung, aufgrund der Verfügbarkeit (ist die SIM-Karte im Mobilfunknetz "eingeloggt" und ist der Kanal verfügbar ?), aufgrund einer eingestellten oder ermittelten Priorität einer verfügbaren SIM-Karte und ggf. aufgrund der Qualität einer verfügbaren SIM-Karte eine der SIM-Karten aus, die den Mobilfunk-Gateways 51, 52, 53 zugeordnet sind. In einer Ausgestaltung wir dabei die "bestmögliche" SIM-Karte ausgewählt, d.h. diejenige SIM-Karte ausgewählt, die vorgegebenen Bewertungskriterien zu den jeweiligen Parametern am besten entspricht.

Durch die erfolgte Zuordnung einer SIM-Karte werden das zu verwendende Mobilfunk-Gateway 51 wie auch der zu verwendende Mobilfunkkanal definiert. Diese Information betreffend den Mobilfunk-Gateway und den Mobilfunkkanal, wobei der Mobilfunkkanal durch die SIM-Karte definiert wird, wird dem Switch 3 vom Rufmanagement-Modul 42 über die Schnittstelle des Switches 3 als Antwort übermittelt. Daraufhin leitet der Switch 3 den Ruf zum gewünschten Mobilfunk-Gateway 51 und dort zu der Mobilstation mit der ausgewählten SIM-Karte. Die ausgewählte Mobilstation realisiert nun einen Mobilfunkkanal zu dem gerufenen Mobilfunkendgerät 2. Die ausgewählte Mobilstation ruft dabei unter Verwendung der ausgewählten SIM-Karte das Mobilfunkendgerät 2 an. Der Ruf wird dabei beispielsweise über eine Sende-Empfangsstation BTS (BTS - Base-Transceiver-Station), eine zugehörige Steuerungseinrichtung und weitere Netzinfrastruktur des involvierten Mobilfunknetzes an das Mobilfunkendgerät 2 übertragen.

Es wird somit ein Mobilfunkkanal unter Verwendung der ausgewählten SIM-Karte bereitgestellt und - nach Beendigung des Rufaufbaus zu dem gerufenen Mobilfunkendgerät 2 und nach Durchschalten des Rufs - für die TK-Verbindung zum Mobilfunkendgerät 2 genutzt.

Gemäß dem geschilderten Verfahren wird ein Switch durch einen SIM-Server auf der Basis diesem vorliegender Daten zu den verwalteten Einsteckkarten gesteuert und wird ein eingehender Verbindungswunsch gezielt auf ein Mobilfunk-Gateway und eine diesem bei Eingang des Rufs zugeordnete selektierte SIM-Karte geleitet. Die dem Switch bereitgestellten Routing-Informationen betreffen somit die Auswahl einer SIM-Karte und damit eines Mobilfunkkanals aus der Menge der verwalteten SIM-Karten, die bei Eingang eines Verbindungsaufbauwunsches mehreren Mobilfunk-Gateways zugeordnet sind.

Die Erfindung beschränkt sich nicht auf die vorstehend dargestellten Ausführungsbeispiele. Beispielsweise können in weiteren Ausgestaltungen andere Netze oder Protokolle verwendet werden. Auch kann beispielsweise vorgesehen sein, dass der SIM-Server aus mehreren verteilten Einheiten besteht und/oder in anderer Weise mit dem Switch kommuniziert. Auch kann vorgesehen sein, dass das Erstellen der Routing-Informationen nicht im SIM-Server oder einem diesem zugeordneten Rufmanagement-Modul, sondern im Switch selbst erfolgt.

## Patentansprüche

1. Verfahren zum Bereitstellen einer Telekommunikationsverbindung (TK-Verbindung) zu einem gerufenen Mobilfunkendgerät, aufweisend:
- Routen eines Verbindungsaufbaus zu einem Switch (3) eines Kommunikationsnetzes, wobei
o mit dem Kommunikationsnetz direkt oder über ein oder mehrere weitere Kommunikationsnetze mehrere Mobilfunk-Gateways (51, 52, 53) mit jeweils einer Mehrzahl von Funkmodulen für die Mobilfunkkommunikation verbunden sind,
o jedem Mobilfunk-Gateway (51, 52, 53) eine Mehrzahl von mit einer Kennung versehenen Einsteckkarten zugeordnet oder zuordenbar ist, die jeweils eine Nutzung eines Funkmoduls für die Mobilfunkkommunikation ermöglichen, und
o die den Mobilfunk-Gateways (51, 52, 53) jeweils zugeordneten oder zuordenbaren Einsteckkarten in einer Einsteckkarten-Vorrichtung (4) gemeinsam angeordnet und verwaltet werden,
- Bereitstellen von Routing-Informationen für den Switch (3), die das Weiterleiten des Verbindungsaufbaus zu einem der Mobilfunk-Gateways (51, 52, 53) betreffen, wobei zum Bereitstellen der Routing-Informationen Daten der Einsteckkarten-Vorrichtung (4) zu mindestens einem Parameter derjenigen der verwalteten Einsteckkarten ausgewertet werden, die bei Eingehen des Verbindungsaufbaus einem der Mobilfunk-Gateways (51, 52, 53) zugeordnet sind, und anhand dieser Auswertung eine der einem der Mobilfunk-Gateways (51, 52, 53) zugeordneten Einsteckkarten für die Mobilkommunikation zu dem gerufenen Mobilfunkendgerät (2) ausgewählt wird,
- Weiterleiten des Verbindungsaufbaus anhand der bereitgestellten. Routing-Informationen vom Switch (3) zu dem Mobilfunk-Gateway (51, 52, 53), das der ausgewählten Einsteckkarte zugeordnet ist,
- Bereitstellen eines Mobilfunkkanals unter Verwendung der ausgewählten Einsteckkarte, und
- Nutzen des bereitgestellten Mobilfunkkanals für die TK-Verbindung zum Mobilfunkendgerät (2), wobei
- zum Bereitstellen der Routing-Informationen als Parameter der verwalteten Einsteckkarten ein Zeit- und/oder Geldkontingent der Einsteckkarten ausgewertet wird.

2. Verfahren nach Anspruch 1, **dadurch gekennzeichnet, dass** zur Bereitstellung von Routing-Informationen der Switch (3) den Verbindungsaufbauwunsch zum gerufenen Mobilfunkendgerät (2) der Einsteckkarten-Vorrichtung (4) oder einer dieser zugeordneten Einheit mitteilt, die Einsteckkarten-Vorrichtung (4) oder die dieser zugeordnete Einheit eine Routing-Information durch Auswerten mindestens eines Parameters der durch die Einsteckkarten-Vorrichtung (4) verwalteten Einsteckkarten erstellt und diese Routing-Information dem Switch (3) mitteilt.

3. Verfahren nach Anspruch 1 oder 2, **dadurch gekennzeichnet, dass** die Routing-Information zumindest Daten enthält, die die ausgewählte Einsteckkarte und ein dieser zugeordnetes Mobilfunk-Gateway (51, 52, 53) identifizieren.

4. Verfahren nach einem der vorangehenden Ansprüche, **dadurch gekennzeichnet, dass** zum Bereitstellen der Routing-Informationen als Parameter der verwalteten Einsteckkarten die Verfügbarkeit der Einsteckkarten ausgewertet wird.

5. Verfahren nach einem der vorangehenden Ansprüche, **dadurch gekennzeichnet, dass** zum Bereitstellen der Routing-Informationen als Parameter der verwalteten Einsteckkarten eine den Einsteckkarten zugeordnete Priorität und/oder ein den Einsteckkarten zugeordneter Tarif ausgewertet wird.

6. Verfahren nach einem der vorangehenden Ansprüche, **dadurch gekennzeichnet, dass** zum Bereitstellen der Routing-Informationen als Parameter der verwalteten Einsteckkarten die Zugehörigkeit der Einsteckkarten jeweils zu einem bestimmten Mobilfunknetz ausgewertet wird.

7. Verfahren nach einem der vorangehenden Ansprüche, **dadurch gekennzeichnet, dass** zum Bereitstellen der Routing-Informationen als Parameter der verwalteten Einsteckkarten mindestens ein den Einsteckkarten zugeordnetes Qualitätsmerkmal ausgewertet wird.

8. Verfahren nach Anspruch 7, **dadurch gekennzeichnet, dass** als Qualitätsmerkmal mindestens eines der folgenden ausgewertet wird:
- die mittlere Verbindungslänge der mit den jeweiligen Einsteckkarten realisierten Mobilfunkverbindungen,
- die Signalstärke der mit den jeweiligen Einsteckkarten realisierten Mobilfunkverbindungen, und
- das Verhältnis zwischen den erfolgreichen und nicht erfolgreichen Verbindungsversuchen der jeweiligen Einsteckkarten.

9. Verfahren nach einem der vorangehenden Ansprüche, **dadurch gekennzeichnet, dass** die Zuordnung einer Einsteckkarte zu einem Mobilfunk-Gateway (51, 52, 53) fest oder temporär erfolgt.

10. Verfahren nach Anspruch 9, **dadurch gekennzeichnet, dass** eine temporäre Zuordnung einer Einsteckkarte zu einem Mobilfunk-Gateway (51, 52, 53) unabhängig erfolgt von Verbindungsaufbauinformationen.

11. Telekommunikationsanordnung zum Bereitstellen einer Telekommunikationsverbindung (TK-Verbindung) zu einem gerufenen Mobilfunkendgerät, aufweisend:
- einen Switch (3) eines Kommunikationsnetzes,
- mehrere Mobilfunk-Gateways (51, 52, 53) mit jeweils einer Mehrzahl von Funkmodulen für die Mobilfunkkommunikation, wobei jedem Mobilfunk-Gateway (51, 52, 53) eine Mehrzahl von mit einer Kennung versehenen Einsteckkarten zugeordnet oder zuordenbar ist, die jeweils eine Nutzung eines Funkmoduls für die Mobilfunkkommunikation ermöglichen,
- eine Einsteckkarten-Vorrichtung (4), in der die den Mobilfunk-Gateways (51, 52, 53) jeweils zugeordneten Einsteckkarten gemeinsam angeordnet und verwaltet werden, wobei
- die Einsteckkarten-Vorrichtung (4) oder eine dieser zugeordnete Einheit dazu geeignet und ausgebildet ist, dem Switch (3) Routing-Informationen bereitzustellen, die das Weiterleiten eines Verbindungsaufbaus an ein Mobilfunk-Gateway (51, 52, 53) betreffen, und dazu Daten zu mindestens einem Parameter derjenigen der verwalteten Einsteckkarten auswertet, die bei Eingehen des Verbindungsaufbaus einem der Mobilfunk-Gateways (51, 52, 53) zugeordnet sind, und anhand dieser Auswertung eine der einem der Mobilfunk-Gateways (51, 52, 53) zugeordneten Einsteckkarten für die Mobilkommunikation zu dem gerufenen Mobilfunkendgerät (2) auswählt,
- wobei ein Rufmanagement-Modul (42) der Einsteckkarten-Vorrichtung (4) oder der dieser zugeordneten Einheit derart ausgebildet ist, dass es ein Zeit- und/oder Geldkontingent der Einsteckkarten als Parameter für die Auswahl einer der verwalteten Einsteckkarten auswertet.

12. Vorrichtung nach Anspruch 11, **dadurch gekennzeichnet, dass** der Switch (3) eine Schnittstelle zur Rufsteuerungaufweist, wobei die Schnittstelle und das Rufmanagement-Modul (42) derart ausgebildet sind, dass
- der Switch (3) bei Vorliegen eines Verbindungsaufbauwunsches zu dem gerufenen Mobilfunkendgerät (2) dem Rufmanagement-Modul (42) über die Schnittstelle den Verbindungsaufbauwunsch signalisiert,
- das Rufmanagement-Modul (42) auf der Basis der Auswertung der Daten zu mindestens einem Parameter der verwalteten Einsteckkarten eine der Einsteckkarten auswählt, und daraufhin
- das Rufmanagement-Modul (42) als Routing-Information Informationen betreffend die ausgewählte Einsteckkarte und ein dieser zugeordnetes Mobilfunk-Gateway (51, 52, 53) an den Switch (3) über dessen Schnittstelle überträgt.

13. Vorrichtung nach Anspruch 11 oder 12, **dadurch gekennzeichnet, dass** das Rufmanagement-Modul (42) derart ausgebildet ist, dass es zusätzlich mindestens einen der folgenden Parameter für die Auswahl einer der verwalteten Einsteckkarten auswertet:
- die Verfügbarkeit der Einsteckkarten,
- eine den Einsteckkarten zugeordnete Priorität,
- einen den Einsteckkarten jeweils zugeordneten Tarif,
- die Zugehörigkeit der Einsteckkarten jeweils zu einem bestimmten Mobilfunknetz, und
- mindestens ein den Einsteckkarten zugeordnetes Qualitätsmerkmal.

14. Vorrichtung nach einem der Ansprüche 11 bis 13, **dadurch gekennzeichnet, dass** der Switch (3) ein TDM-Switch oder Softswitch ist und/oder die Einsteckkarten SIM-Karten sind und/oder die Einsteckkarten-Vorrichtung (4) ein SIM-Server ist.

## Claims

1. A method for providing a telecommunication connection (TC connection) to a called mobile radio terminal, comprising
- routing of a connection establishment to a switch (3) of a communication network, wherein
o a plurality of mobile radio gateways (51, 52, 53) each having a plurality of radio modules for mobile radio communication are connected with the communication network directly or via one or more further communication networks,
o to each mobile radio gateway (51, 52, 53) a plurality of insertion cards provided with an identifier is allocated or allocatable, which insertion cards each provide for a utilization of a radio module for mobile radio communication, and
o the insertion cards each allocated or allocatable to the mobile radio gateways (51, 52, 53) are arranged and administered together in an insertion card device (4),
- providing routing information for the switch (3) regarding the forwarding of the connection establishment to one of the mobile radio gateways (51, 52, 53), wherein for providing the routing information data of the insertion card device (4) relating to at least one parameter of those of the administered insertion cards are evaluated, which upon incoming of the connection establishment are allocated to one of the mobile radio gateways (51, 52, 53), and by means of this evaluation one of the insertion cards allocated to one of the mobile radio gateways (51, 52, 53) is selected for the mobile communication with the called mobile radio terminal (2),
- forwarding the connection establishment by means of the provided routing information from the switch (3) to the mobile radio gateway (51, 52, 53), which is allocated to the selected insertion card,
- providing a mobile radio channel by using the selected insertion card, and
- using the provided mobile radio channel for the TC connection to the mobile radio terminal (2), wherein
- for providing the routing information as parameter of the administered insertion cards a time and/or money quota of the insertion cards is evaluated.

2. The method according to claim 1, **characterized in that** for providing routing information the switch (3) informs the insertion card device (4) or a unit allocated to the same about the request for connection establishment to the called mobile radio terminal (2), the insertion card device (4) or the unit allocated to the same generates a routing information by evaluating at least one parameter of the insertion cards administered by the insertion card device (4) and communicates this routing information to the switch (3).

3. The method according to claim 1 or 2, **characterized in that** the routing information at least contains data which identify the selected insertion card and a mobile radio gateway (51, 52, 53) allocated to the same.

4. The method according to any of the preceding claims, **characterized in that** for providing the routing information as parameter of the administered insertion cards the availability of the insertion cards is evaluated.

5. The method according to any of the preceding claims, **characterized in that** for providing the routing information as parameter of the administered insertion cards a priority allocated to the insertion cards and/or a tariff allocated to the insertion cards is evaluated.

6. The method according to any of the preceding claims, **characterized in that** for providing the routing information as parameter of the administered insertion cards the belonging of the insertion cards each to a particular mobile radio network is evaluated.

7. The method according to any of the preceding claims, **characterized in that** for providing the routing information as parameter of the administered insertion cards at least one quality feature allocated to the insertion cards is evaluated.

8. The method according to claim 7, **characterized in that** as quality feature at least one of the following is evaluated:
- the mean connection length of the mobile radio connections realized with the respective insertion cards,
- the signal strength of the mobile radio connections realized with the respective insertion cards, and
- the ratio between the successful and unsuccessful connection attempts of the respective insertion cards.

9. The method according to any of the preceding claims, **characterized in that** the allocation of an insertion card to a mobile radio gateway (51, 52, 53) takes place fixedly or temporarily.

10. The method according to claim 9, **characterized in that** a temporary allocation of an insertion card to a mobile radio gateway (51, 52, 53) takes place independently of connection establishment information.

11. A telecommunication arrangement for providing a telecommunication connection (TC connection) to a called mobile radio terminal, comprising:
- a switch (3) of a communication network,
- a plurality of mobile radio gateways (51, 52, 53) each having a plurality of radio modules for mobile radio communication, wherein to each mobile radio gateway (51, 52, 53) a plurality of insertion cards provided with an identifier is allocated or allocatable, which each provide for a utilization of a radio module for the mobile radio communication,
- an insertion card device (4) in which the insertion cards each allocated to the mobile radio gateways (51, 52, 53) are arranged and administered together, wherein
- the insertion card device (4) or a unit allocated to the same is adapted and formed to provide the switch (3) with routing information which relate to the forwarding of a connection establishment to a mobile radio gateway (51, 52, 53), and for this purpose evaluates data concerning at least one parameter of those of the administered insertion cards which upon incoming of the connection establishment are allocated to one of the mobile radio gateways (51, 52, 53), and by means of this evaluation selects one of the insertion cards allocated to one of the mobile radio gateways (51, 52, 53) for the mobile communication to the called mobile radio terminal (2),
- wherein a call management module (42) of the insertion card device (4) or unit allocated to the same is formed such that it evaluates a time and/or money quota of the insertion cards as parameter for the selection of one of the administered insertion cards.

12. The device according to claim 11, **characterized in that** the switch (3) comprises an interface to the call control, wherein the interface and the call management module (42) are formed such that
- the switch (3) upon existence of a connection establishment request to the called mobile radio terminal (2) signals the connection establishment request to the call management module (42) via the interface
- the call management module (42) on the basis of the evaluation of the data regarding at least one parameter of the administered insertion cards selects one of the insertion cards, and thereupon
- the call management module (42) transmits as routing information to the switch (3) information regarding the selected insertion card and a mobile radio gateway (51, 52, 53) allocated to the same via the interface of the switch.

13. The device according to claim 11 or 12, **characterized in that** the call management module (42) is formed such that it additionally evaluates at least one of the following parameters for the selection of one of the administered insertion cards:
- the availability of the insertion cards,
- a priority allocated to the insertion cards,
- a tariff allocated to each of the insertion cards,
- the belonging of the insertion cards each to a particular mobile radio network, and
- at least one quality feature allocated to the insertion cards.

14. The device according to any of claims 11 to 13, **characterized in that** the switch (3) is a TDM switch or a soft switch and/or the insertion cards are SIM cards and/or the insertion card device (4) is a SIM server.

## Revendications

1. Procédé destiné à la préparation d'une liaison de télécommunication (liaison TC) vers un terminal de radiocommunication mobile appelé, comportant :
- le routage d'un établissement de liaison vers un commutateur (3) d'un réseau de communication, sachant que
- plusieurs passerelles de radiocommunication mobile (51, 52, 53), ayant chacune une pluralité de modules de radiocommunication, sont reliées pour la radiocommunication mobile au réseau de communication directement ou par le biais d'un ou de plusieurs autres réseaux de communication,
- une pluralité de cartes enfichables dotées d'un identifiant est associée ou peut être associée à chaque passerelle de radiocommunication mobile (51, 52, 53), lesdites cartes enfichables permettant chacune une utilisation d'un module de radiocommunication pour la radiocommunication mobile, et
- les cartes enfichables associées ou pouvant être associées respectivement aux passerelles de radiocommunication mobile (51, 52, 53) sont disposées et gérées ensemble dans un dispositif de cartes enfichables (4),
- la préparation d'informations de routage pour le commutateur (3), qui concernent le transfert de l'établissement de liaison à une des passerelles de radiocommunication mobile (51, 52, 53), sachant que, pour la préparation des informations de routage, on évalue des données du dispositif de cartes enfichables (4) relatives à au moins un paramètre des cartes enfichables parmi les cartes enfichables gérées qui, lors de l'arrivée de l'établissement de liaison, sont associées à une des passerelles de radiocommunication mobile (51, 52, 53) et, à l'aide de cette évaluation, on sélectionne une des cartes enfichables, associée à une des passerelles de radiocommunication mobile (51, 52, 53), pour la communication mobile vers le terminal de radiocommunication mobile (2) appelé,
- le transfert de l'établissement de liaison à l'aide des informations de routage préparées du commutateur (3) à la passerelle de radiocommunication mobile (51, 52, 53) qui est associée à la carte enfichable sélectionnée,
- la préparation d'un canal de radiocommunication mobile en employant la carte enfichable sélectionnée, et
- l'utilisation du canal de radiocommunication mobile préparé pour la liaison TC vers le terminal de radiocommunication mobile (2), sachant que
- pour la préparation des informations de routage, on évalue un contingent de temps et/ou d'argent des cartes enfichables en tant que paramètre des cartes enfichables gérées.

2. Procédé selon la revendication 1, **caractérisé en ce que**, pour la préparation des informations de routage, le commutateur (3) communique le souhait d'établissement de liaison vers le terminal de radiocommunication mobile (2) appelé au dispositif de cartes enfichables (4) ou à une unité associée à ce dernier, le dispositif de cartes enfichables (4) ou l'unité associée à ce dernier crée une information de routage par l'évaluation d'au moins un paramètre des cartes enfichables gérées par le dispositif de cartes enfichables (4) et communique cette information de routage au commutateur (3).

3. Procédé selon la revendication 1 ou 2, **caractérisé en ce que** l'information de routage contient au moins des données qui identifient la carte enfichable sélectionnée et une passerelle de radiocommunication mobile (51, 52, 53) associée à celle-ci.

4. Procédé selon l'une quelconque des revendications précédentes, **caractérisé en ce que**, pour la préparation des informations de routage, on évalue la disponibilité des cartes enfichables en tant que paramètre des cartes enfichables gérées.

5. Procédé selon l'une quelconque des revendications précédentes, **caractérisé en ce que**, pour la préparation des informations de routage, on évalue une priorité associée aux cartes enfichables et/ou un tarif associé aux cartes enfichables en tant que paramètre des cartes enfichables gérées.

6. Procédé selon l'une quelconque des revendications précédentes, **caractérisé en ce que**, pour la préparation des informations de routage, on évalue l'appartenance des cartes enfichables respectivement à un certain réseau de radiocommunication mobile en tant que paramètre des cartes enfichables gérées.

7. Procédé selon l'une quelconque des revendications précédentes, **caractérisé en ce que**, pour la préparation des informations de routage, on évalue au moins une caractéristique de qualité associée aux cartes enfichables en tant que paramètre des cartes enfichables gérées.

8. Procédé selon la revendication 7, **caractérisé en ce que** l'on évalue en tant que caractéristique de qualité au moins une des grandeurs suivantes :
- la longueur de liaison moyenne des liaisons de radiocommunication mobile réalisées avec les cartes enfichables respectives,
- l'intensité de signal des liaisons de radiocommunication mobile réalisées avec les cartes enfichables respectives, et
- le rapport entre les essais de liaison réussis et non réussis des cartes enfichables respectives.

9. Procédé selon l'une quelconque des revendications précédentes, **caractérisé en ce que**, l'association d'une carte enfichable à une passerelle de radiocommunication mobile (51, 52, 53) est effectuée en permanence ou temporairement.

10. Procédé selon la revendication 9, **caractérisé en ce qu'**une association temporaire d'une carte enfichable à une passerelle de radiocommunication mobile (51, 52, 53) est effectuée indépendamment des informations d'établissement de liaison.

11. Agencement de télécommunication destiné à la préparation d'une liaison de télécommunication (liaison TC) vers un terminal de radiocommunication mobile appelé, comportant :
- un commutateur (3) d'un réseau de communication,
- plusieurs passerelles de radiocommunication mobile (51, 52, 53) équipées chacune d'une pluralité de modules de radiocommunication pour la radiocommunication mobile, sachant qu'une pluralité de cartes enfichables dotées d'un identifiant est associée ou peut être associée à chaque passerelle de radiocommunication mobile (51, 52, 53), lesdites cartes permettant chacune une utilisation d'un module de radiocommunication pour la radiocommunication mobile,
- un dispositif de cartes enfichables (4), dans lequel les cartes enfichables associées chacune aux passerelles de radiocommunication mobile (51, 52, 53) sont disposées et gérées ensemble, sachant que
- le dispositif de cartes enfichables (4) ou une unité associée à ce dernier est approprié ou conçu pour préparer pour le commutateur (3) des informations de routage, qui concernent le transfert d'un établissement de liaison à une passerelle de radiocommunication mobile (51, 52, 53), et évalue à cet effet des données relatives à au moins un paramètre des cartes parmi les cartes enfichables gérées qui, lors de l'arrivée de l'établissement de liaison, sont associées à une des passerelles de radiocommunication mobile (51, 52, 53) et, à l'aide de cette évaluation, sélectionne une des cartes enfichables associées à une des passerelles de radiocommunication mobile (51, 52, 53) pour la communication mobile vers le terminal de radiocommunication mobile (2) appelé,
- sachant qu'un module de gestion d'appels (42) du dispositif de cartes enfichables (4) ou de l'unité associée à ce dernier est conçu de manière telle qu'il évalue un contingent de temps et/ou d'argent des cartes enfichables en tant que paramètre pour la sélection d'une des cartes enfichables gérées.

12. Dispositif selon la revendication 11, **caractérisé en ce que** le commutateur (3) comporte une interface pour la commande d'appels, sachant que l'interface et le module de gestion d'appels (42) sont conçus de manière telle que
- le commutateur (3), en présence d'un souhait d'établissement de liaison vers le terminal de radiocommunication mobile (2) appelé, signale au module de gestion d'appels (42) le souhait d'établissement de liaison par le biais de l'interface,
- le module de gestion d'appels (42) sélectionne une des cartes enfichables sur la base de l'évaluation des données relatives à au moins un paramètre des cartes enfichables gérées et, sur ce,
- le module de gestion d'appels (42) transmet au commutateur (3), par le biais de son interface, des informations concernant la carte enfichable sélectionnée et une passerelle de radiocommunication mobile (51, 52, 53) associée à celle-ci en tant qu'information de routage.

13. Dispositif selon la revendication 11 ou 12, **caractérisé en ce que** le module de gestion d'appels (42) est conçu de manière telle qu'il évalue en plus au moins un des paramètres suivants pour la sélection d'une des cartes enfichables gérées :
- la disponibilité des cartes enfichables,
- une priorité associée aux cartes enfichables,
- un tarif associé respectivement aux cartes enfichables,
- l'appartenance des cartes enfichables respectivement à un certain réseau de radiocommunication mobile, et
- au moins une caractéristique de qualité associée aux cartes enfichables.

14. Dispositif selon l'une quelconque des revendications précédentes 11 à 13, **caractérisé en ce que** le commutateur (3) est un commutateur TDM ou un commutateur logiciel et/ou les cartes enfichables sont des cartes SIM et/ou le dispositif de cartes enfichables (4) est un serveur SIM.
